# EUROPÄISCHE PATENTSCHRIFT

(11) **EP 2 931 167 B1**
(45) Veröffentlichungstag und Bekanntmachung des Hinweises auf die Patenterteilung: **06.03.2019**
(21) Anmeldenummer: 13791738.1
(22) Anmeldetag: 07.11.2013
(51) Int. Cl.: A61C 8/00, A61C 13/265

(54) **EIN- ODER MEHRTEILIGES IMPLANTATSYSTEM MIT EINEM AUFBAUELEMENT MIT EINEM ODER MEHREREN AUSSENRINGEN**
ONE-PART OR MULTI-PART IMPLANT SYSTEM COMPRISING A MOUNTING ELEMENT HAVING ONE OR MORE OUTER RINGS
SYSTÈME D'IMPLANT EN UNE OU PLUSIEURS PARTIES, MUNI D'UN ÉLÉMENT DE MONTAGE PRÉSENTANT UNE OU PLUSIEURS BAGUES EXTÉRIEURES

(30) Priorität: 11.12.2012 DE 102012024230; 13.02.2013 DE 102013002517
(43) Veröffentlichungstag der Anmeldung: 21.10.2015
(73) Patentinhaber: Kulzer GmbH, 63450 Hanau (DE)
(72) Erfinder: JEHLE, Thomas, A-6500 Landeck (AT); SIEGELE, Otmar, A-6555 Kappl (AT)
(74) Vertreter: Bendele, Tanja
(86) Internationale Anmeldenummer: PCT/EP2013/003349
(87) Internationale Veröffentlichungsnummer: WO 2014/090358

(56) Entgegenhaltungen:
- EP-A2- 0 445 667
- WO-A2-2006/138351
- WO-A2-2011/027230
- US-A- 5 417 569
- US-B1- 6 299 447

## Beschreibung

Die Erfindung betrifft ein ein- oder mehrteiliges Zahnimplantatsystem mit einem Aufbauelement. Ferner betrifft die Erfindung Aufbauelemente zur Fixierung von implantatverankertem herausnehmbarem Zahnersatz.

### Stand der Technik

Unter anderen Ausführungsformen setzt sich Zahnersatz für vollständig fehlende oder zu ersetzende Zähne aus einem Zahnimplantatsystem, welches ein Implantat und optionale Aufbauteile beinhaltet, und einer Zahnprothese zusammen. Dabei übernimmt das Zahnimplantat die Funktion der Zahnwurzel und die Zahnprothese die der Kaufläche des Zahns. Implantate können alle erdenklichen Formen besitzen. In der Praxis haben sich aber konische und zylindrische Implantate durchgesetzt. Dabei unterscheiden sich diese Implantate vorzugsweise in ihrer Konizität und ihrem Außengewinde, wie z.B. im Fall der *CAMLOG*® *SCREW-LINE* Implantate, der *CAMLOG*® *ROOT-LINE* Implantate und in der Reihe der *Strauman SLA*® und *SLActive*® Implantate.

Es wird zwischen festsitzendem und herausnehmbarem Zahnersatz unterschieden. Der Stabilität und problematischen Reinigungsmöglichkeiten des festsitzenden Zahnersatzes stehen die hervorragenden Reinigungsmöglichkeiten und die schlechte Stabilität des herausnehmbaren Zahnersatzes entgegen. Beide Eigenschaften können positiv verbunden werden, indem kombinierter Zahnersatz zum Einsatz gebracht wird. Ein solcher kombinierter Zahnersatz besteht aus einer Zahnprothese, welche über einen Steckverbindungsmechanismus auf das im Kiefer fixierte Zahnimplantat montiert wird. Im Stand der Technik etablierte Steckmechanismen sind z.B. das Kugelkopfverbindungselement, Steckbrückensysteme oder Patrizen-Matrizen-Steckverbindungssysteme wie das Locator-System (US 2004/0005530; US6 299 447; US6 030 219).

In allen drei verschiedenen Verbindungssystemen wird der Abstand der Zahnprothese zum Knochen, bzw. die Überwindung der biologischen Breite, also des Abstandes zwischen der tiefsten Stelle der Zahnfleischfurche und dem Beginn des Kieferknochens, durch die Länge des Aufbauelements definiert. In diesem Bereich haben die Aufbauelemente eine glatte Oberfläche und bestehen normalerweise aus Titan (WO 2008/079699; EP 0 437 031). Titan ist bekannt als ein sehr biokompatibles Metall, welches die Anlagerung von organischem Material erleichtert. Als ein Nebeneffekt können sich auch vermehrt pathogene Keime an der Titanoberfläche des Aufbauelements anlagern und dort für Entzündungen sorgen. Des Weiteren kann sich eine Zahnfleischfurche zwischen der Oberfläche des Aufbauelements und dem Zahnfleisch bilden bzw. eine schon vorhandene Zahnfleischfurche weiten und verlängern. Im Speichel enthaltene Bakterien können entlang dieser Zahnfleischfurche zwischen der Oberfläche des Aufbauelements und dem Zahnfleisch bis zu der Oberfläche des Kieferknochens vordringen und dort zu Plaqueanlagerung und daraus resultierenden Entzündungen führen. Eine solche Entzündung kann die Lockerung und den kompletten Verlust eines Zahnimplantats zur Folge haben.

Zahnimplantate müssen auf die unterschiedlichen Bedingungen im Mundraum angepasst werden. So sind bei einem Zahn nicht nur verschiedene Angulationen zwischen der Zahnwurzel und der Zahnkrone zu finden, sondern auch verschieden hohe Zahnfleischränder. Z.B. sind die Zahnfleischränder die an der Innenseite der Zahnreihe anliegen, im Durchschnitt höher als die, die an der Außenseite der Zahnreihe anliegen.

Für die Aufbauelemente können unterschiedlichste Formen verwendet werden. In der Praxis durchgesetzt haben sich zylindrische (*Straumann RN PLAN LOCATOR*®) oder vom Zylinder abgeleitete Formen wie Zylinder mit stark abgerundeten Ecken (*Straumann WN PLAN LOCATOR*®) sowie variablem Durchmesser (*Straumann WN PLAN Massivsekundärteil 6°*). Dokument EP 2 366 360 offenbart ein Zahnimplantatsystem bestehend aus einem Implantat, einem aufschraubbaren Aufbauelement mit einer Steckverbindung für die Zahnprothese am oberen Ende des Aufbauelements. Ein solches Zahnimplantatsystem zeigt typische Probleme im Zusammenhang mit Bakterien. So lockert sich das Implantat gewöhnlicherweise im Verlaufe der Heilung, weil die ursprünglich durch die Verschraubung hergestellte Spannung vom Knochen abgebaut wird. Erst danach beginnt die vollständige Einheilung des Implantats. Während dieser Zeit ist die Spalte zwischen dem Implantat und dem Knochen anfällig für Bakterienbefall und Zahnfleischwucherung. Des Weiteren ist auch die Zahnfleischfurche oberhalb des Implantats, also zwischen dem Zahnfleisch und dem Aufbauelement, immer anfällig für Bakterienbefall. Beide Infektionsarten können zum Verlust des Implantats führen. Dokument DE 196 44 333 offenbart eine Membran am oberen Ende des Implantats. Diese separate Membran verschließt den Knochenspalt zwischen Implantat und Knochen und verhindert so ein Eindringen von Bakterien oder Zahnfleisch. Allerdings verhindert diese Membran kein Eindringen gegenüber Bakterien in die Zahnfleischfurche. Des Weiteren bildet dieses Dokument keine allgemeine Lehre, von der sich eine Lösung für das Problem des Eindringens von Bakterien in die Zahnfleischfurche ableiten ließe, da die Membranlösung zwei möglichst feste, gegeneinander möglichst starre Phasen, wie z.B. den Knochen und das Implantat, voraussetzt.

Dokument EP 0 445 667 offenbart halbleitende und damit hochohmige Materialien, wie z.B. Zirkomiumoxid, als Plaque- und Bakterienbildungsinhibitoren in Form einer Oberflächenschicht an Implantat und Aufbauelement. Allerdings löst EP 0 445 667 das Problem des Eindringens von Bakterien in die Zahnfleischfurche nicht vollständig.

Ein weiteres Zahnimplantatsystem ist aus US 5,417,569 bekannt.

Es ist daher Aufgabe der Erfindung ein Zahnimplantatsystems zur Fixierung von herausnehmbarem Zahnersatz bereit zu stellen, wobei das Zahnimplantatsystem ein Aufbauelement enthält, welches die Ansammlung und das Vordringen von im Speichel enthaltenen Bakterien zu der Knochengrenze der künstlichen Wurzel minimieren und teilweise verhindern kann. Ferner soll die nötige Angulation des Aufbauelements für Implantate oder Abutmente integral, d. h. ohne zusätzliche Elemente gelöst werden.

Die Erfindung beruht auf der Erkenntnis, dass ein Vordringen von im Speichel enthaltenen Bakterien zur Knochengrenze vermindert wird, wenn ein Aufbauelement mit einem Außenring eingesetzt wird, so dass die biologische Breite des Zahnfleisches vom Kieferknochen bis mindestens kurz über diesen Außenring gewährleistet wird. Ferner beruht die Erfindung auf der Erkenntnis, dass ein gewinkeltes Aufbauelement eine vereinfachte Anpassung von Implantaten oder Abutmenten an die Erfordernisse, die durch Kiefer- und Zahnstellung bestimmt werden, ermöglicht. Bisherige Implantate konnten Winkeldifferenzen von 10° (historisch auch bis zu 20°) kompensieren, indem die Scherkräfte vom Material vornehmlich an der Matrizen-Patrizen-Verbindung aufgenommen wurden. Dies hatte einen erhöhten Verschleiß der Implantate zur Folge. Dementsprechend kann durch die Anwendung abgewinkelter Aufbauelemente die Haltbarkeitsdauer der Implantate signifikant verlängert werden. Des Weiteren können durch abgewinkelte Aufbauelemente unterschiedliche Kupplungsebenen ausgeglichen und damit maßgeschneiderte Aufbauelemente für alle möglichen Zahnpositionen erstellt werden. Unabhängig davon beruht die Erfindung auf der Erkenntnis, dass im Mundraum unterschiedliche Höhen des Zahnfleisches zu beobachten sind (zum und vom Mundraum stehende Seiten der Zahnreihe) und dass sich diese Höhe des anliegenden Zahnfleisches über die Höhe der Außenringe variieren lässt.

Die Erfindung stellt ein Aufbauelement nach Anspruch 1 bereit.

Eine nicht beanspruchte Ausführungsform stellt ein nicht gewinkeltes Aufbauelement mit mindestens einem Außenring dar, welcher eine Angulation oder keine Angulation aufweisen kann. Des Weiteren sind alle Kombinationen von Außenringen mit und ohne Angulation möglich. Die Außenringe können eine oder mehrere Lücken aufweisen.

Eine weitere nicht beanspruchte Ausführungsform stellt ein gewinkeltes Aufbauelement mit mindestens einem Außenring dar, welcher eine Angulation oder keine Angulation aufweisen kann. Des Weiteren sind alle Kombinationen von Außenringen mit und ohne Angulation möglich. Die Außenringe können eine oder mehrere Lücken aufweisen.

Als Zahnersatz bezeichnet man alle künstlichen Bestandteile, die die Wiederherstellung von verlorenen, natürlichen Zahnfunktionen gewährleistet. Neben festsitzendem und herausnehmbarem Zahnersatz gibt es kombinierten Zahnersatz. Kombinierter Zahnersatz setzt sich aus einem Implantatsystem sowie einer fixierbaren Zahnprothese zusammen. Dabei wird das fixierbare Bauteil auf dem im Kiefer fixierten Bauteil durch einen Verbindungsmechanismus abnehmbar montiert.

Ein Implantatsystem umfasst das Implantat sowie alle weiteren Teile, die nötig sind, um die Zahnprothese zu montieren. In einem einteiligen Implantatsystem sind keine weiteren Teile nötig, da die Zahnprothese direkt auf dem Implantat montiert wird. Ein mehrteiliges Implantatsystem umfasst das Implantat, mindestens ein Abutment und mindestens ein Aufbauelement. In einem mehrteiligen Implantatsystem wird das Implantat bevorzugt über ein Abutment und ein Aufbauelement verbunden.

Ein Implantat ist der Träger der Zahnprothese und ein künstlicher Ersatz der natürlichen Zahnwurzel. Seine Funktion ist die Verankerung der Zahnprothese im Kieferknochen. In einem einteiligen Implantatsystem ist das Implantat ein Vollkörper, welcher die Zahnprothese trägt, und wird direkt im Kieferknochen befestigt. In einem mehrteiligen Implantatsystem ist das Implantat ein Hohlkörper, welcher im Kieferknochen befestigt wird, in dem ein Abutment befestigt ist, auf welchem ein Aufbauelement montiert ist.

Das Aufbauelement ist ein Voll- oder Hohlkörper und kann an seinem oberen Ende eine eingearbeitete Patrize oder Matrize vorweisen.

Das Abutment ist ein Voll- oder Hohlkörper mit einer Abutmentplatte am oberen Ende.

Das obere Ende von allen beschriebenen Teilen beschreibt immer das Ende, welches sich näher an der befestigten Zahnprothese bzw. näher an der Aufnahme für die Zahnprothese befindet.

Das untere Ende von allen beschriebenen Teilen beschreibt immer das Ende, welches sich näher an dem Implantat befindet.

Eine Matrize ist eine in ein Werkstück eingearbeitete Freiform, die eine mechanische Verbindung mit einer komplementären Patrize eingehen kann, indem die Matrize die Patrize von außen passgenau umschließt.

Eine Patrize ist eine in ein Werkstück eingearbeitete Freiform, die eine mechanische Verbindung mit einer komplementären Matrize eingehen kann, indem die sich die Patrize in die Matrize von innen passgenau einfügt.

Ein Außenring ist ein dreidimensionaler Körper der entlang der Außenseite des Grundkörpers des Aufbauelements eine konzentrische, aufbauende Auswölbung darstellt. Der Außenring wird durch seine Breite und seine Höhe sowie seinen Abstand, gegebenenfalls mittleren Abstand, zum unteren Ende des Grundkörpers des Aufbauelements, sowie die Angulation in Bezug auf die untere Seite des Aufbauelements charakterisiert.

Die Angulation des Außenrings ist dann gegeben, wenn die Ebene, die der Außenring bildet, und die Kupplungsebene am unteren Ende des Grundkörpers nicht parallel zueinander stehen.

Die breiteste Stelle des Außenrings ist die Stelle, an der der Außenring seinen maximalen effektiven Durchmesser erreicht.

Der effektive Durchmesser ist der Durchmesser bei zylindrischer Form. Im Falle von nicht kreisförmiger Querschnittsfläche ist der effektive Durchmesser derjenige, welcher dem Durchmesser einer kreisförmigen Querschnittsfläche mit gleicher Fläche entspricht.

Die Breite des Außenrings ist der Abstand von der breitesten Stelle des Außenrings bis zu der Basis des Außenrings, welche mit der Oberfläche des Aufbauelements übereinstimmt.

Die Höhe des Außenrings ist der Abstand im Querschnitt des Aufbauelements zwischen den beiden Punkten, an denen der Außenring einen breiteren effektiven Durchmesser aufweist als der Grundkörper des Aufbauelements aber gleichzeitig den geringsten effektiven Durchmesser im gesamten Außenring besitzt.

Eine Kappe ist eine Hülse, welche an einer Seite geschlossen ist.

Ein Friktionseinsatz ist ein oben geschlossenes Verschleißteil aus elastischem Polymer mit einer auf der offenen Seite eingearbeiteten Matrize oder Patrize.

Eine Zahnfleischfurche (Sulcus gingivae) ist ein gewinkelter Spalt zwischen der Oberfläche des Grundkörpers des Aufbauelements und dem anliegenden Zahnfleisch. Die Zahnfleischfurche kann bis zum Kieferknochen gebildet werden.

Eine Ausnehmung ist die Reduktion an einem Punkt oder entlang einer Linie eines dreidimensionalen Körpers, infolgedessen eine Einwölbung an der Oberfläche entsteht.

Ein Grundkörper ist eine dreidimensionale Form, die zentrale Merkmale bereitstellt, die in allen von ihr abgeleiteten Formen noch vorhanden sind.

Die Angulation des Grundkörpers ist dann gegeben und der Grundkörper damit gewinkelt, wenn die Flächen auf dem oberen bzw. auf dem unteren Ende des Grundkörpers nicht parallel zueinander stehen. Zahnersatz unterteilt sich in drei unterschiedliche Kompositionen von Teilen, welche die natürliche Zahnfunktion artifiziell ausfüllen können. Solche Kompositionen können festsitzend, herausnehmbar oder als Kombination aus beiden Eigenschaften vorkommen. Ausführungsformen sind u.a. Kronen, Brücken oder Zahnprothesen. In einem kombinierten Zahnersatz wird ein Implantat im Kiefer befestigt, auf dem eine Zahnprothese durch einen Verbindungsmechanismus (Kugelkopf, Steckleisten, Locator etc.) abnehmbar fixiert wird. Kombinierter Zahnersatz verleiht der herausnehmbaren Zahnprothese durch diesen Verbindungsmechanismus zu im Kiefer fixierten Implantaten Stabilität und verbessert gleichzeitig die Hygiene durch die Möglichkeit, die Zahnprothese abzunehmen.

Ein Implantatsystem bezeichnet alle Bestandteile, die nötig sind, um eine Zahnprothese im Kieferknochen zu befestigen. Dabei wird unterschieden zwischen einteiligen und mehrteiligen Implantatsystemen. Einteilige Implantatsysteme umfassen ein Implantat, welches einen Vollkörper darstellt und eine Implantatoberfläche bereitstellt, die die Zahnprothese trägt. Mehrteilige Implantatsysteme umfassen ein Implantat, welches einen Hohlkörper darstellt, der ein optionales Innengewinde trägt. Über ein Abutment wird ein Aufbauelement auf dem Implantat montiert. Die Zahnprothese wird an diesem Aufbauelement befestigt.

Ein Implantat ist ein im Kiefer verankertes Teil aus einem biokompatiblen Metall (z.B. Titan oder eine Titanlegierung) und ersetzt die Funktion der natürlichen Zahnwurzel, indem es der auf ihm montierten Zahnprothese Halt und Stabilität verleiht. Es kann eine optionale raue Oberfläche, ein optionales Außengewinde sowie ein optionales Innengewinde besitzen. Das Implantat wird in dem Kieferknochen befestigt, wobei die optionale raue Oberfläche eine stabile Verbindung mit dem Kieferknochen gewährleistet. Implantate kommen in einteiligen und mehrteiligen Implantatsystemen vor. Im einteiligen Implantatsystem ist die Zahnprothese fest über die Implantatoberfläche auf dem Implantat fixiert, während in einem mehrteiligen Implantatsystem ein Aufbauelement auf einem Abutment fixiert ist, welches in einem im Kieferknochen fixierten Implantat befestigt wird. Das Implantat wird in Verbindung mit der Zahnprothese, welche entweder dauerhaft auf dem Implantat fixiert oder über eine Steckverbindung abnehmbar montiert wird, funktionalisiert. Bevorzugte Ausführungsformen von Implantaten haben eine zylindrische oder konische Form. Diese Ausführungsformen umfassen auch zylindrische oder konische Formen mit abgerundeten Kanten und Spitzen.

Das Aufbauelement besteht aus Titan, einer Titanlegierung oder einer Keramik und hat am oberen Ende seines Voll- oder Hohlkörpers eine optionale Patrize oder Matrize eingearbeitet. Bei einteiligen Implantatsystemen wird das Aufbauelement auf der Implantatoberfläche dauerhaft fixiert. Bei mehrteiligen Implantatsystemen wird das Aufbauelement auf dem Abutment, speziell auf der Abutmentplatte, dauerhaft fixiert und über das Abutment mit dem Implantat abnehmbar verschraubt. Das Aufbauelement stellt die Verbindungseinheit zur dauerhaft oder abnehmbar fixierten Zahnprothese dar. Im Falle einer abnehmbaren Fixierung sind am oberen Ende des Aufbauelements gängige Formen für so eine Fixierung eingearbeitet, wie z. B. ein Kugelkopf, eine Matrize oder Patrize. Bevorzugte Ausführungsformen von Ausbauelementen haben eine zylindrische Form. Diese Ausführungsformen umfassen auch zylindrische Formen mit abgerundeten Kanten. Ein gewinkeltes Aufbauelement ermöglicht den Aufbau einer gewinkelten Verbindung von Implantat oder Abutment mit einer Zahnprothese, optional einem Friktionseinsatz. Insofern bestimmt die relative Position der beiden zu verbindende Elemente (Implantat und Zahnprothese) die Angulation des Aufbauelements, respektive des Grundkörpers. Gewöhnlich lässt sich gedanklich auf einfache Weise eine Kupplungsebene bestimmen, die orthogonal zur Längsachse des Implantats bzw. Abutments steht und am oberen Ende des Aufbauelements zu finden ist. In gleicher Weise lässt sich gedanklich auf einfache Weise eine zweite Kupplungsebene bestimmen, die orthogonal zur Längsachse des Verbindungselements der Zahnprothese steht und am unteren Ende des Aufbauelements zu finden ist. Eine Angulation ist dann vorhanden, wenn die Kupplungsebenen nicht parallel zueinander stehen. Die äußere Form des Grundkörpers ist daher abgesehen von der Bereitstellung der genannten Kupplungsebenen irrelevant für die Definition einer Angulation des Aufbauelements, respektive Grundkörpers.

Für die Erfindung besonders geeignete Abutmente verfügen über eine Verdrehsicherung, um eine fixierte Position des Aufbauelements im Mundraum zu gewährleisten und eine Rotation des Aufbauelements auf dem Abutment zu verhindern. Eine solche Verdrehsicherung besteht vorwiegend aus einer am Aufbauelement innen entlang der Längsachse eingefrästen Nut und einer zur Nut passgenauen Feder, welche beim Verbinden ineinander geschoben werden und ein Verdrehen verhindern. Beispiele für solche Abutment bieten die HEX-Abutmente der Firma *Zirkonzahn*®, z.B. *CAMLOG*® - *J-TYPE*/*K-TYPE HEX* oder *FRIADENT DENTSPLY*-*XIVE*® *HEX.*

Das Abutment besteht aus Titan, einer Titanlegierung oder einer Keramik und weist eine Abutmentplatte am oberen Ende seines Voll- oder Hohlkörpers auf. Auf der Abutmentplatte wird das Aufbauelement fixiert. Das Abutment wird im Implantat befestigt, z.B. durch eine Abutmentschraube im optionalen Innengewinde des Implantats verschraubt, und dient als abnehmbares Verbindungselement zwischen Aufbauelement und Implantat. Bevorzugte Ausführungsformen von Abutmenten haben eine zylindrische Form. Diese Ausführungsformen umfassen auch zylindrische Formen mit abgerundeten Kanten.

Eine Matrize ist eine Freiform, die in ein Werkstück eingearbeitet wird und mit einer komplementären Freiform, der Patrize, abnehmbar verbunden werden kann. Eine solche Matrize findet im Locator-System Verwendung und ermöglicht eine abnehmbare Steckverbindung. Die Matrize ist entweder an der Oberseite des Aufbauelements oder in der Unterseite der Kappe bzw. des Friktionseinsatzes eingearbeitet. Die Verbindung von Aufbauelement und Zahnprothese erfolgt bevorzugt mithilfe eines Friktionseinsatzes.

Eine Patrize ist eine Freiform, die in ein Werkstück eingearbeitet wird und mit einer komplementären Freiform, der Matrize, abnehmbar verbunden werden kann. Eine solche Patrize findet im Locator-System Verwendung und ermöglicht eine abnehmbare Steckverbindung. Die Patrize ist entweder an der Oberseite des Aufbauelements oder in der Unterseite der Kappe bzw. des Friktionseinsatzes eingearbeitet. Die Verbindung von Aufbauelement und Zahnprothese erfolgt bevorzugt mithilfe eines Friktionseinsatzes.

Ein Außenring befindet sich an der Außenseite des Aufbauelements und wird über seine Breite und seine Höhe sowie seinen Abstand zum unteren Ende des Voll- oder Hohlkörpers des Aufbauelements charakterisiert. Dabei kann der Abstand zum unteren Ende des Aufbauelements an allen Stellen konstant sein, aber auch einen größten und einen kleinsten Abstand unter allen Abständen aufweisen. Des Weiteren kann der Außenring eine oder mehrere Lücken aufweisen, d.h. die Auswölbung des Außenrings muss nicht durchgängig an der Oberfläche des Aufbauelements zu finden sein. Da der Außenring direkt in den Voll- oder Hohlkörper des Aufbauelements eingearbeitet wird, besteht er aus demselben Material, wie z.B. Titan, einer Titanlegierung oder einer Keramik. Aufbauelemente, die einen oder zwei Außenringe aufweisen, erhöhen die Bindegewebeverträglichkeit des Aufbauelements mit der Schleimhaut des anliegenden Zahnfleisches und vermindern die Bildung von Zahnfleischfurchen und somit die Ansammlung von Plaque mit darin enthaltenen Bakterien, das Entstehen von Entzündungen und letztendlich den vorzeitigen Verlust des Implantats. Wenn ein Außenring einen nicht konstanten Abstand zum unteren Ende des Aufbauelements aufweist, handelt es sich um einen gewinkelten Außenring. Ein solcher gewinkelter Außenring ermöglicht den Aufbau verschiedener Zahnfleischhöhen um das Aufbauelement. Gewöhnlich lässt sich gedanklich auf einfache Weise eine Kupplungsebene bestimmen, die orthogonal zur Längsachse des Implantats bzw. Abutments steht und am unteren Ende des Aufbauelements zu finden ist. In gleicher Weise lässt sich gedanklich auf einfache Weise eine Ebene bestimmen, die der Fläche des Außenrings entspricht. Eine Angulation des Außenrings ist dann vorhanden, wenn die Kupplungsebene und die Ebene des Außenrings nicht parallel zueinander stehen.

Die breiteste Stelle des Außenrings bezeichnet die Position an seiner Oberfläche, die den maximalen effektiven Durchmesser aufweist.

Die Breite des Außenrings ist der Abstand entlang des Lots von der breitesten Stelle des Außenrings bis zu der Höhe der Oberfläche des Aufbauelements.

Die Höhe des Außenrings ist der Abstand zwischen zwei Punkten im Querschnitt des Außenrings, zwischen denen die breiteste Stelle des Außenrings liegt und die einen breiteren effektiven Durchmesser aufweisen als das Aufbauelement, aber den geringsten effektiven Durchmesser im gesamten Außenring besitzen.

Der Abstand des Außenrings zum unteren Ende des Aufbauelements ist die kürzeste Entfernung zwischen dem unteren Ende des Aufbauelements und einem Punkt, der zwischen dem unteren Ende des Aufbauelements und der breitesten Stelle des Außenrings liegt und der einen breiteren effektiven Durchmesser aufweist als das Aufbauelement, aber den geringsten effektiven Durchmesser im gesamten Außenring besitzt.

Der mittlere Abstand des Außenrings beschreibt die Hälfte der Summe des kleinsten und größten Abstandes des Außenringes zum unteren Ende des Aufbauelements. Für Aufbauelemente mit Außenringen mit konstantem Abstand zum unteren Ende des Aufbauelements sind mittlerer Abstand und der Abstand zum unteren Ende des Aufbauelements identisch.

Eine Kappe ist ein Hohlkörper aus Titan, einer Titanlegierung oder einer Keramik (z.B. Zirkoniumoxid) mit einer geschlossenen Seite. Die Zahnprothese ist dauerhaft an der Kappe fixiert und die Kappe kann einen Friktionseinsatz an der Unterseite tragen. Wenn kein Friktionseinsatz vorhanden ist, kann ein Verbindungselement wie eine Matrize oder Patrize in die Kappe eingearbeitet sein.

Ein Friktionseinsatz besteht aus einem elastischen Polymer und bildet auf einer Seite die Negativform der Kappe, in die es hinein passt. Auf der offenen Seite des Friktionseinsatzes kann eine Matrize oder Patrize eingearbeitet sein. Der Friktionseinsatz wird in der Kappe fixiert und dient zur Definition des Druckpunktes der abnehmbaren Steckverbindung zwischen Aufbauelement und Zahnprothese. Die Verbindung von Aufbauelement und Zahnprothese erfolgt bevorzugt mithilfe eines Friktionseinsatzes.

Als Zahnfleischfurche (Sulcus gingivae) bezeichnet man die Öffnung zwischen der Oberfläche des Aufbauelements und dem anliegenden Zahnfleisch. In einer Zahnfleischfurche können sich Bakterien ansammeln, welche zu einer Entzündung und einer weiteren Öffnung der Zahnfleischfurche bis hin zur Kieferknochenoberfläche führen können. Eine solche Entzündung kann bis zum vorzeitigen Verlust des Implantats führen. Eine Sulcustiefe von über 2 mm ist als pathologisch einzustufen.

Ein Grundkörper stellt zentrale Merkmale einer dreidimensionalen Form zur Verfügung, über die alle von ihm abgeleiteten Ausführungsformen verfügen. Beispielsweise hat ein Aufbauelement einen Zylinder als Grundkörper, wobei eine Ausführungsform ein Vollzylinder, eine andere ein Hohlzylinder mit einer bestimmten Wandstärke sein kann.

Eine Ausnehmung ist die Vertiefung der Oberfläche zwischen zwei Außenringen. Dabei ist der effektive Durchmesser des Aufbauelements an den breitesten Stellen der Außenringe höher als an jedem Punkt der Ausnehmung zwischen den Außenringen.

Im Gegensatz zu herkömmlichen Aufbauelementen kann sich bei der vorliegenden Erfindung kein Spalt zwischen Zahnfleisch und Aufbauelement bilden, der sich bis zu der Oberfläche des Kieferknochens öffnet. Ein Eindringen von Bakterien zwischen Zahnfleisch und Aufbauelement eventuell sogar bis zu der Knochenoberfläche wird durch die Applikation eines Außenrings gegenüber Aufbauelementen ohne Außenring vermindert.

Das Aufbauelement hat bevorzugt einen Voll- oder Hohlkörper mit einem effektiven Durchmesser von 1,5 mm bis 10 mm, bevorzugt 2 mm bis 8 mm, stärker bevorzugt 2,5 mm bis 7 mm, am meisten bevorzugt 3 mm bis 6 mm.

Das Aufbauelement hat bevorzugt einen Außenring mit einer Breite von 0,1 mm bis 5,0 mm, bevorzugt 0,2 mm bis 3,0 mm, stärker bevorzugt 0,5 mm bis 2,0 mm, am meisten bevorzugt 0,7 mm bis 1,5 mm.

Das Aufbauelement hat bevorzugt einen Außenring mit einer eine Höhe von 0,1 mm bis 3 mm, bevorzugt 0,5 mm bis 2,5 mm, am meisten bevorzugt mm bis 2 mm.

Der nicht gewinkelte Außenring eines Aufbauelements hat eine Angulation von 0°.

Der gewinkelte Außenring eines Aufbauelements hat eine Angulation von 1° bis 40°, mehr bevorzugt von 3° bis 25° und am meisten bevorzugt von 5° bis 15°. Die Angulation des Außenrings wird nur in positiven Winkeln angegeben. Da die Angulation des Außenrings unabhängig ist von der Angulation des Aufbauelements sind alle möglichen Kombinationen dieser Winkel möglich. Bevorzugt ist die Ausführung, in der die beiden Angulationen gegenläufig auftreten, d.h. die Seite des größten Abstandes der Außenringe vom unteren Ende des Aufbauelements genau gegenüber der Seite mit dem größten Angulation des Aufbauelements liegt.

Das abgewinkelte Aufbauelement hat eine Angulation mit einem Winkel von 5° bis 50°, bevorzugt von 7° bis 40°, noch mehr bevorzugt von 8° bis 30° und am meisten bevorzugt von 9° bis 20°.

Das Implantat wird vorzugsweise so eingebaut, dass der Außenring des Aufbauelementes zwischen der Kieferknochenoberfläche und der tiefsten Stelle der Zahnfleischfurche, also innerhalb der biologischen Breite, positioniert wird.

Das Aufbauelement hat bevorzugt einen mittleren Abstand zwischen dem unteren Ende des Außenrings und dem unteren Ende des Aufbauelements von 0,3 mm bis 7 mm, bevorzugt 0,4 mm bis 6 mm, am meisten bevorzugt 0,5 mm bis 5 mm. Ferner kann es vorteilhaft sein, dass der Abstand nicht an allen Stellen gleich ist. Es hat sich gezeigt, dass in der eingebauten Position der Außenring auf der dem Mundraum zugewandten Seite höher und der dem Mundraum abgewandten Seite niedriger liegen kann.

Das Aufbauelement besitzt erfindungsgemäß einen zweiten Außenring unterhalb des ersten Außenringes an der Oberfläche, wobei sich zwischen dem ersten und dem zweiten Außenring eine Ausnehmung um den Voll- oder Hohlkörper herum ausbildet. Wie bei dem ersten Außenring kann auch der zweite Außenring einen kleinsten und größten Abstand zum unteren Ende des Aufbauelements aufweisen.

Das Aufbauelement hat bevorzugt einen zweiten Außenring mit den gleichen Ausmaßen wie der erste Außenring.

Das Aufbauelement hat bevorzugt einen Abstand zwischen den breitesten Stellen der beiden Außenringe von 0,1 mm bis 5 mm, mehr bevorzugt 0,5 mm bis 4 mm, am meisten bevorzugt 1 mm bis 3 mm. Erfindungsgemäß ist der Abstand der breitesten Stellen der beiden Außenringe über den gesamten Bereich der Außenringe konstant.

Das Aufbauelement hat bevorzugt eine Höhe von 1 mm bis 15 mm, mehr bevorzugt 2 mm bis 12 mm, am meisten bevorzugt 3 mm bis 9 mm.

Das Material des Aufbauelements umfasst vorzugsweise Keramik. Besonders bevorzugt ist Zirkoniumoxid (ZrO₂).

Insbesondere besteht die Oberfläche des Aufbauelements bevorzugt aus Zirkoniumoxid (ZrO₂).

Besonders bevorzugt ist die Ausführung der Oberfläche aus Zirkoniumoxid (ZrO₂) im Bereich der biologischen Breite D.

Das Aufbauelement hat vorzugsweise eine Matrize oder Patrize in sein oberes Ende eingearbeitet.

In einer bevorzugten Ausführungsform der Erfindung ist das Aufbauelement als Hohlkörper ausgestaltet und die Befestigung des Aufbauelements mit dem Implantat erfolgt bevorzugt über ein Abutment, welches über eine Schraube durch das Innere des Aufbauelements mit dem Implantat verschraubt wird.

In einer ebenfalls bevorzugten Ausführungsform der Erfindung umfasst das Aufbauelement einen Vollkörper, der ein Außengewinde zur Befestigung des Aufbauelements in dem Implantat aufweist.

Ferner betrifft die Erfindung ein einteiliges Implantatsystem nach Anspruch 19 zur Verankerung von herausnehmbaren Zahnprothesen, welches ein Implantat zur Befestigung des Implantatsystems in einem Kieferknochen oder einer Zahnwurzel, eine Implantatoberfläche als oberes Ende des Implantats und ein Aufbauelement, das auf der Implantatoberfläche befestigbar ist, enthält.

Des Weiteren betrifft die Erfindung ein mehrteiliges Implantatsystem nach Anspruch 20 zur Verankerung von herausnehmbaren Zahnprothesen, welches ein Implantat zum Einsetzen in einen Kieferknochen oder eine Zahnwurzel, ein Abutment mit einem Schaft zur Befestigung des Abutments in dem Implantat, eine Abutmentplatte am oberen Ende des Schafts, und einem Aufbauelement, das auf der Abutmentplatte befestigbar ist, enthält.

Eine weitere bevorzugte Ausführungsform der Erfindung umfasst ein einteiliges oder mehrteiliges Implantatsystem, bei dem das Aufbauelement mit der Implantatoberfläche oder Abutmentplatte verschraubbar ist.

Eine bevorzugte Verwendung der Erfindung umfasst die Minimierung und teilweise Verhinderung des Eindringens von im Speichel enthaltenen Bakterien in die Zahnfleischfurche und/oder das Verhindern der Ausdehnung der Zahnfleischfurche und/oder den Ausgleich unterschiedlicher Zahnfleischhöhen bei ein- oder mehrteiligen Zahnimplantaten durch Aufbauelemente mit einem oder zwei Außenringen.

### Figurenbeschreibung

Fig. 1: Nicht beanspruchtes Implantataufbauelement, Grundkörper mit einem Außenring, Ausgestaltung des Implantataufbauelements als Patrize
Fig. 2: Nicht beanspruchtes Implantataufbauelement, Grundkörper mit einem Außenring, Ausgestaltung des Implantataufbauelements als Matrize
Fig. 3: Nicht beanspruchtes Implantataufbauelement, Grundkörper mit zwei Außenringen, Ausgestaltung des Implantataufbauelements als Patrize
Fig. 4 Nicht beanspruchtes Implantataufbauelement, Ausgestaltung als Vollkörper mit Außengewinde zur Befestigung mit Implantat
Fig. 5a-e Nicht beanspruchtes Implantataufbauelement, Ausgestaltung als Hohlkörper, Befestigung des Implantataufbauelements mit Schraube im Implantat
Fig. 6a-d Implantataufbauelemente, wovon die Ausführungen in 6a, 6b und 6d nicht beansprucht sind. Die Figuren 6a-6d zeigen verschiedene Kombinationen von ungewinkelten und gewinkelten Grundkörpern sowie gewinkelten Außenringen mit konstantem sowie kleinstem und größtem Abstand zum unteren Ende des Aufbauelements.

### Liste der Bezugszeichen

- 10: Implantataufbauelement
- 11: erster Außenring
- 12: Patrize
- 13: unteres Ende des Implantataufbauelements
- 14: Matrize
- 15: zweiter Außenring
- 16: Ausnehmung zwischen den zwei Außenringen
- 17: Angulation des Grundkörper des Aufbauelements
- 18: Angulation des Außenrings
- 20: Implantatoberfläche oder Abutmentplatte
- 21: Implantat
- 22: Abutment
- 23: Abutmentschraube
- 24: Friktionskörper
- 25: Außengewinde
- 26: Kappe
- 30: Kieferknochen
- 40: Zahnfleisch
- 41: Sulcus gingivae / Zahnfleischfurche
- A: Höhe des Außenrings
- B: Breite des Außenrings
- C: Abstand des unteren Rands des Außenrings zum unteren Ende des Implantataufbauelements
- D: biologische Breite / Abstand der tiefsten Stelle der Zahnfleischfurche zum Kieferknochen
- E: Abstand zwischen den breitesten Stellen der beiden Außenringe

### Ausführungsformen der Offenbarung

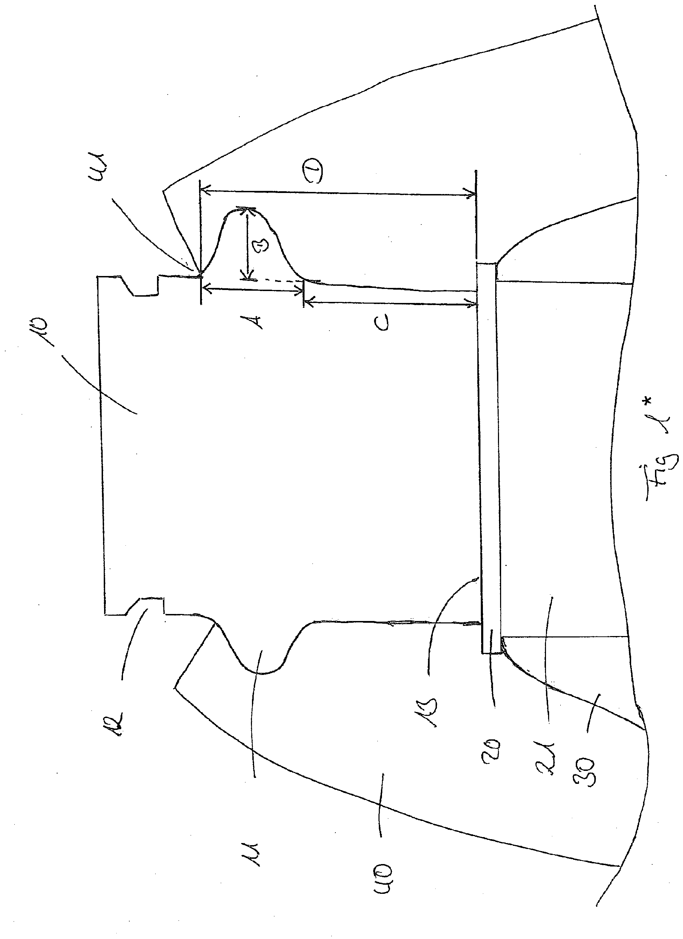

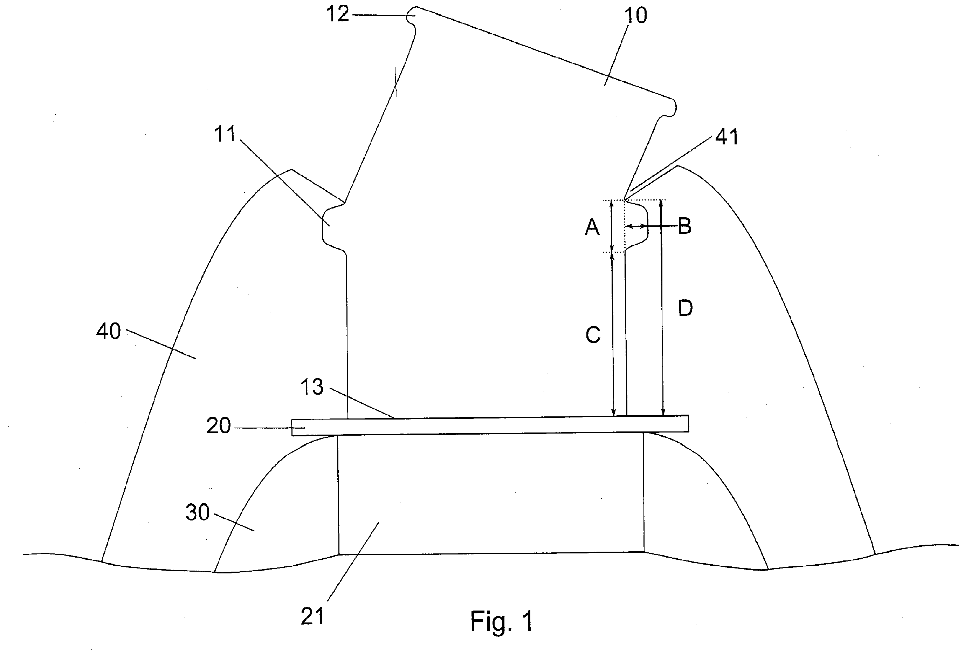

Allgemein zeigen die Figuren mit einem ,*' hinter den Figurennummern, also Figuren 1*, 2*, 3*, 4*, 5*a-e die gleichen Figuren wie die ohne ,*', stellen aber eine Ausführungsform mit einem *nicht gewinkelten* Aufbauelement dar.

Figur 1 zeigt ein einteiliges oder mehrteiliges Implantatsystem, das im Kieferknochen 30 verankert ist und auf das ein abgewinkeltes Aufbauelement 10 montiert ist. Dieses Aufbauelement 10 besitzt einen Außenring 11 mit der Breite B und der Höhe A, wobei Breite und Höhe in derselben Größenordnung liegen. Die Lage des Außenrings 11 wird über die biologische Breite D und den Abstand C von seinem unteren Ende zur Abutmentplatte oder Implantatoberfläche 20 bzw. dem unteren Ende des Aufbauelements 13 definiert. Das Zahnfleisch 40 setzt über dem Außenring am Aufbauelement 10 an und weist nur eine kleine Zahnfleischfurche 41 auf. Am oberen Ende des Aufbauelements 10 ist eine Patrize eingearbeitet.

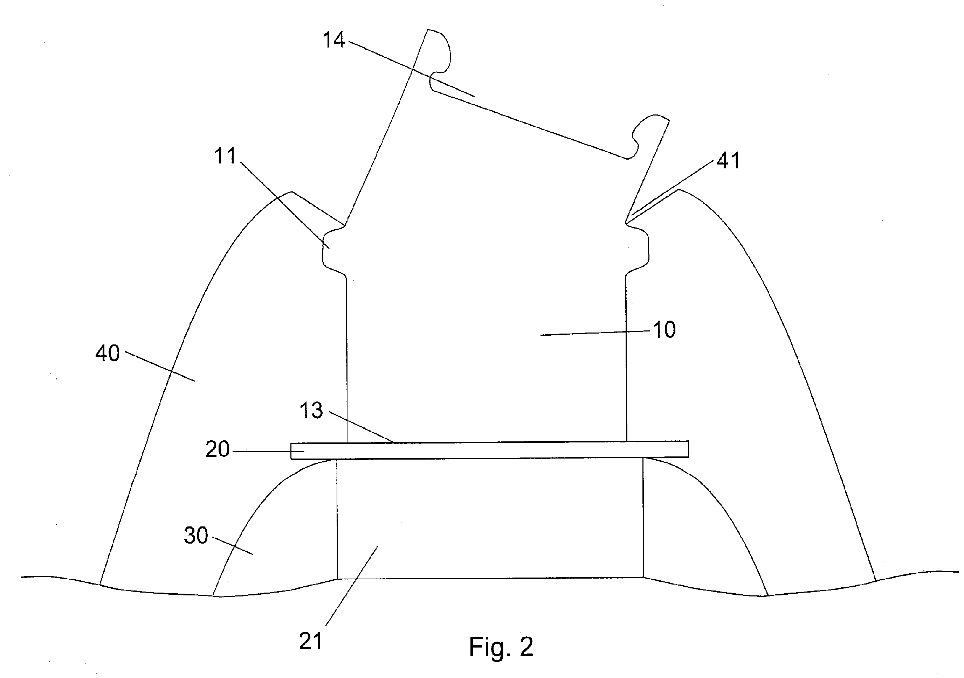

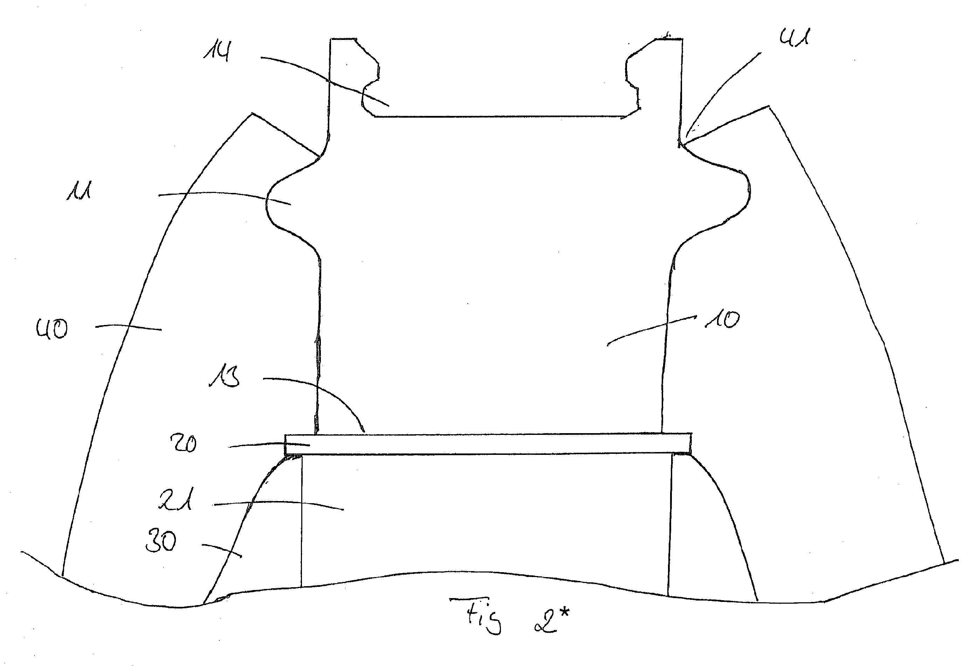

Figur 2 zeigt ein einteiliges oder mehrteiliges Implantatsystem, das im Kieferknochen 30 verankert ist und auf dessen Abutmentplatte oder Implantatoberfläche 20 ein abgewinkeltes Aufbauelement 10 mit seinem unteren Ende 13 montiert ist. Dieses Aufbauelement 10 besitzt einen Außenring 11, an dessen oberen Ende das Zahnfleisch 40 ansetzt und nur eine kleine Zahnfleischfurche 41 aufweist. Das Aufbauelement 10 hat an seinem oberen Ende eine Matrize eingearbeitet.

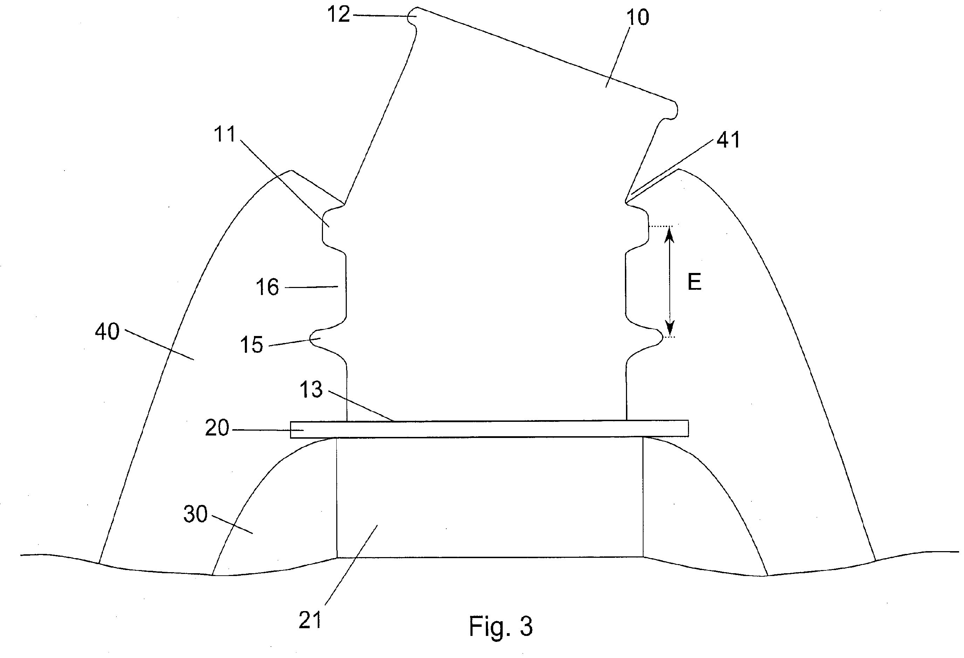

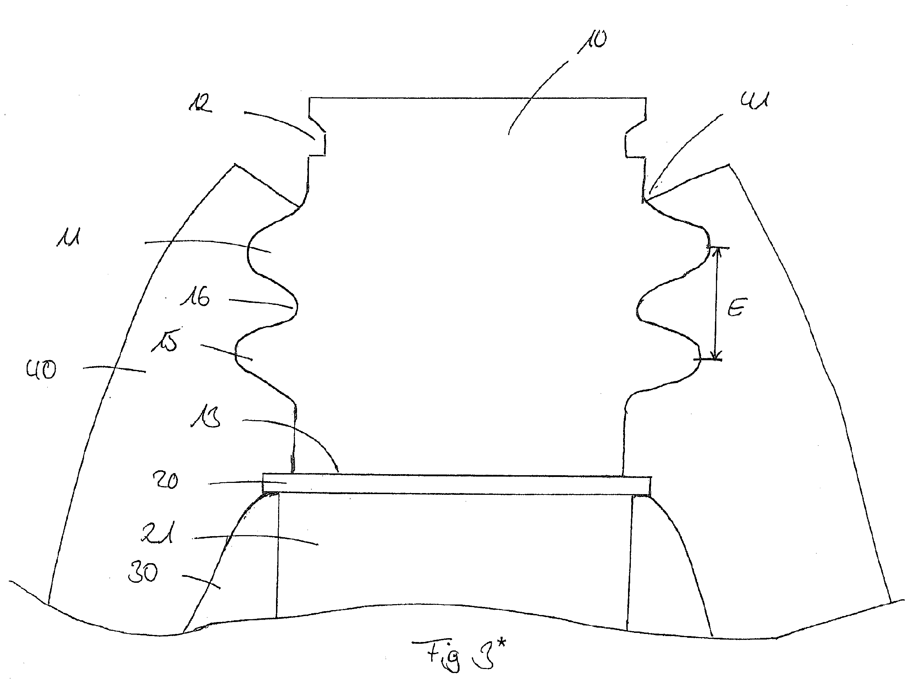

Figur 3 zeigt ein einteiliges oder mehrteiliges Implantatsystem, das im Kieferknochen 30 verankert ist und auf dessen Abutmentplatte oder Implantatoberfläche 20 eine abgewinkeltes Aufbauelement mit seinem unteren Ende 13 montiert ist. Dieses Aufbauelement besitzt neben einem Außenring 11 einen zweiten Außenring 15, der sich mit dem Abstand E zum ersten Außenring 11 zwischen dem ersten Außenring und dem unteren Ende des Aufbauelements 13 befindet. Zwischen den beiden Außenringen ergibt sich eine Ausnehmung 16. Das Zahnfleisch 40 setzt am oberen Ende des ersten Außenrings 11 an und bildet nur eine kleine Zahnfleischfurche 41. Am oberen Ende des Aufbauelements 10 ist eine Patrize eingearbeitet.

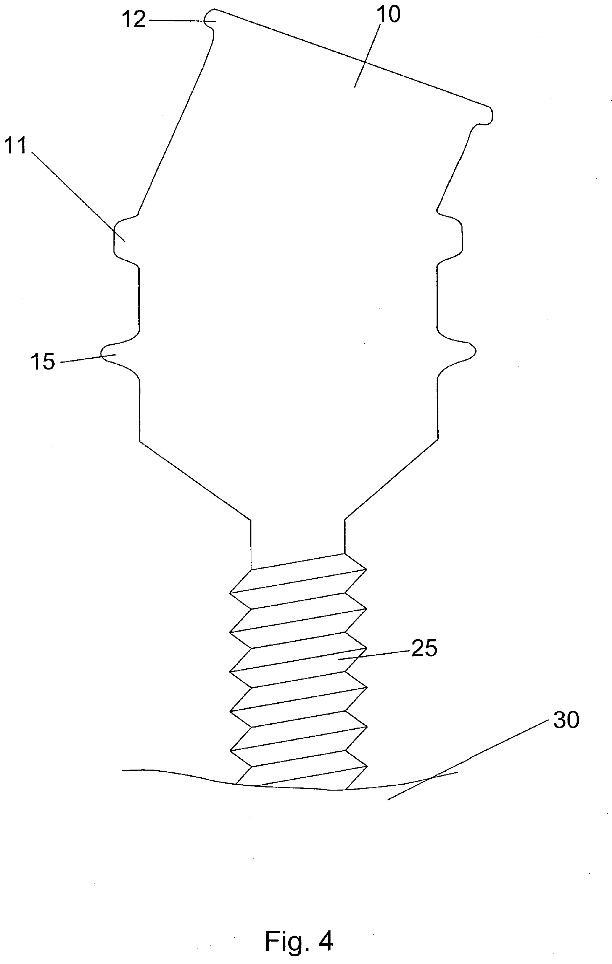

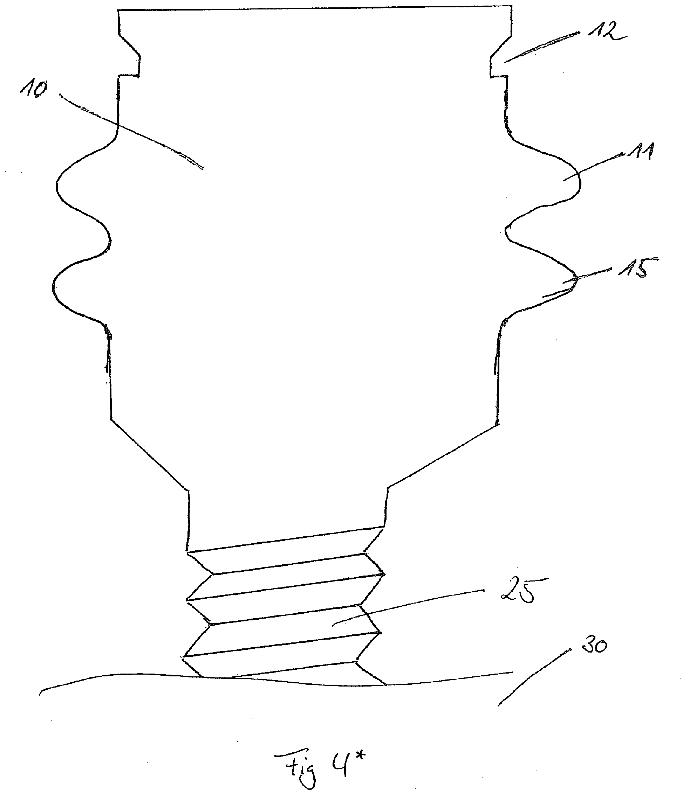

Figur 4 zeigt ein einteiliges Implantatsystem, das neben einem ersten Außenring 11 einen zweiten Außenring 15 an seinem abgewinkelten Aufbauelement 10 aufweist. Das Aufbauelement ist fest auf dem Implantat fixiert, welches ein Außengewinde 25 besitzt. Das Implantat wird über dieses Außengewinde 25 im Kieferknochen 30 verschraubt.

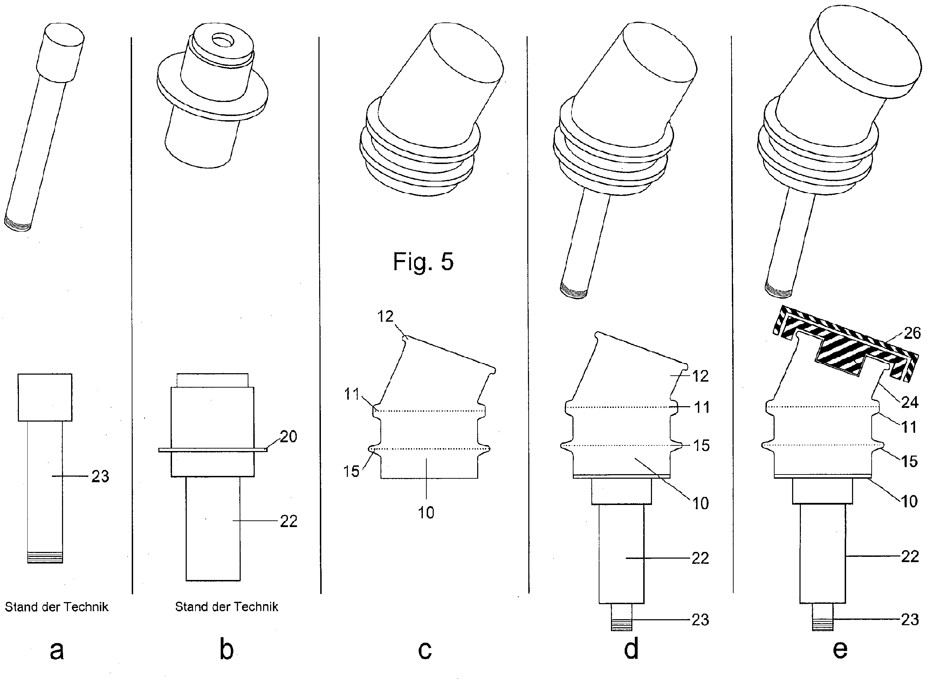

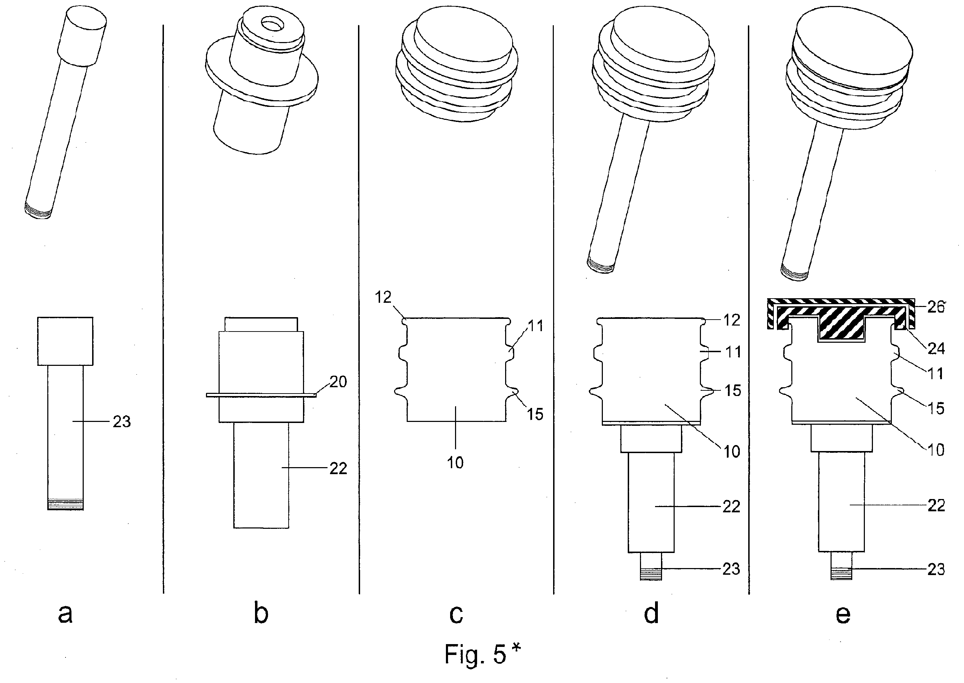

Figur 5a ist Stand der Technik und zeigt als Schnitt und perspektivische Darstellung eine Abutmentschraube 23 mit einem Außengewinde am unteren Ende und einem Aufsatz mit größerem effektivem Durchmesser am oberen Ende, welcher das Durchrutschen des Abutments 22 verhindern soll.

Figur 5b ist Stand der Technik und zeigt als Schnitt und perspektivische Darstellung ein Abutment 22, welches eine Abutmentplatte 20 aufweist. Das Abutment ist ein Hohlkörper und wird durch seine Hohlform über die Abutmentschraube 23 (Figur 5a) mit dem Implantat 21 verschraubt.

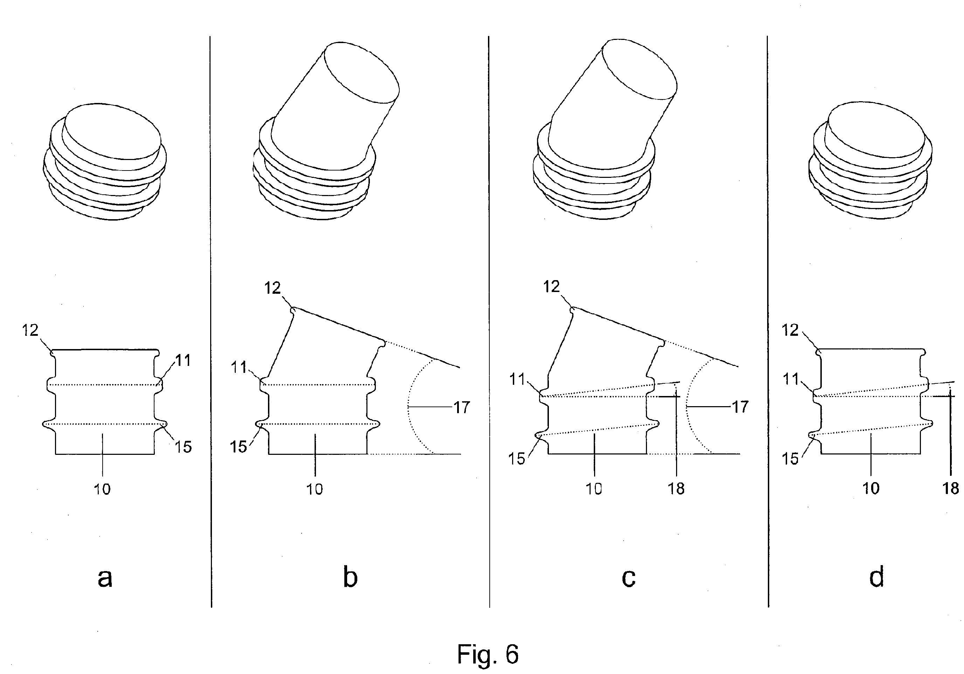

Figur 5c und 6b zeigt als Schnitt und perspektivische Darstellung ein abgewinkeltes Aufbauelement 10 mit der Angulation 17, mit einem ersten Außenring 11, einem zweiten Außenring 15, wobei erster und zweiter Außenring einen konstanten Abstand zum unteren Ende des Aufbauelements und damit einen Winkel von 0° zwischen der Kupplungsebene des unteren Endes des Aufbauelements und der Ebene des Außenrings aufweisen, sowie einer Patrize 12. Das Aufbauelement 10 wird auf dem Abutment 22 fixiert. Über die Patrize 12 kann eine Zahnprothese, welche eine Matrize aufweist, abnehmbar verbunden werden.

Figur 5d zeigt als Schnitt und perspektivische Darstellung ein gewinkeltes Aufbauelement 10, welches auf einem Abutment 22 fixiert ist, in welchem eine Abutmentschraube 23 steckt. Das Abutment 22 ist durchsichtig dargestellt. Das Aufbauelement 10 besitzt einen ersten 11 und einen zweiten Außenring 15 sowie eine Patrize 12 am oberen Ende. Die Abutmentschraube 23 befindet sich in der Hohlform des Abutments 22 und das Aufbauelement 10 ist auf der Abutmentplatte 20 des Abutments 22 montiert.

Figur 5e zeigt als Schnitt und perspektivische Darstellung ein gewinkeltes Aufbauelement 10, welches auf einem Abutment 22 fixiert ist, in welchem eine Abutmentschraube 23 steckt. Das Abutment 22 ist durchsichtig dargestellt. Das Aufbauelement 10 besitzt einen ersten 11 und einen zweiten Außenring 15 sowie eine Patrize 12 am oberen Ende. Die Abutmentschraube 23 befindet sich in der Hohlform des Abutments 22 und das Aufbauelement 10 ist auf der Abutmentplatte 20 des Abutments 22 montiert. Eine Kappe 26, in der ein Friktionseinsatz 24 mit einer eingearbeiteten Matrize 14 fixiert ist, wird über diese Matrize und die Patrize des Aufbauelements 10 mit dem Aufbauelement 10 abnehmbar verbunden.

Figur 6a zeigt als Schnitt und perspektivische Darstellung ein nicht abgewinkeltes Aufbauelement 10 mit einem ersten Außenring 11 und einem zweiten Außenring 15, welche einen konstanten Abstand zum unteren Ende des Aufbauelements und damit einen Winkel von 0° zwischen der Kupplungsebene des unteren Endes des Aufbauelements und der Ebene des Außenrings aufweisen, sowie einer Patrize 12. Das Aufbauelement 10 wird auf dem Abutment 22 fixiert. Über die Patrize 12 kann eine Zahnprothese, welche eine Matrize aufweist, abnehmbar verbunden werden.

Figur 6c zeigt als Schnitt und perspektivische Darstellung ein abgewinkeltes Aufbauelement 10 mit der Angulation 17, mit einem ersten Außenring 11, sowie einer Patrize 12 und einem zweiten Außenring 15. Das Aufbauelement weist den größten Abstand vom unteren Ende zum Außenring an der Stelle auf, an der die kleinste Angulation am Grundkörper zu finden ist, und folglich eine Angulation 18 zwischen der Kupplungsebene des unteren Endes des Aufbauelements und der Ebene der Außenringe 11 und 15 auf, die ungleich 0° ist. Weiterhin weist das Aufbauelement den kleinsten Abstand zum unteren Ende an der Stelle auf, an der die größte Angulation am Grundkörper zu finden ist. Das Aufbauelement 10 wird auf dem Abutment 22 fixiert. Über die Patrize 12 kann eine Zahnprothese, welche eine Matrize aufweist, abnehmbar verbunden werden.

Figur 6d zeigt als Schnitt und perspektivische Darstellung ein nicht gewinkeltes Aufbauelement 10 mit einem ersten Außenring 11 und einem zweiten Außenring 15, welche einen größten Abstand zum unteren Ende des Aufbauelements und einen kleinsten Abstand zum unteren Ende des Aufbauelements und folglich eine Angulation 18 zwischen der Kupplungsebene des unteren Endes des Aufbauelements und der Ebene der Außenringe 11 und 15 auf, die ungleich 0° ist, aufweisen, sowie einer Patrize 12. Das Aufbauelement 10 wird auf dem Abutment 22 fixiert. Über die Patrize 12 kann eine Zahnprothese, welche eine Matrize aufweist, abnehmbar verbunden werden.

## Patentansprüche

1. Aufbauelement (10) zur Fixierung von implantatverankerten, herausnehmbaren Zahnprothesen, enthaltend
ein unteres Ende zur Befestigung des Aufbauelements (10) mit einem Implantat (21) oder Abutment (22); ein oberes Ende zur Verbindung des Aufbauelements mit einer Zahnprothese, optional einem Friktionseinsatz (21); wobei der Grundkörper des Aufbauelements (10) einen Aussenring (11) aufweist, wobei der Grundkörper des Aufbauelements gewinkelt ist, und
wobei der Grundkörper des Aufbauelements einen zweiten Aussenring (15) aufweist, der so am Grundkörper unterhalb des ersten Aussenrings positioniert ist, dass sich zwischen dem ersten Aussenring (11) und dem zweiten Aussenring (15) eine Ausnehmung um den Grundkörper herum ausbildet, und wobei mindestens ein Aussenring eine Angulation von 1° bis 40° bezüglich einer unteren Seite des Aufbauelements (10) aufweist, **dadurch gekennzeichnet, dass** der Abstand der breitesten Stellen der beiden Außenringe über den gesamten Bereich der Außenringe konstant ist.

2. Aufbauelement gemäss Anspruch 1, wobei die Angulation des Grundkörpers einen Winkel von 5° bis 50°, bevorzugt von 7° bis 40° aufweist.

3. Aufbauelement gemäss Anspruch 1, wobei der Grundkörper des Aufbauelements einen effektiven Durchmesser von 1,5 mm bis 10 mm aufweist.

4. Aufbauelement gemäss Ansprüchen 1 bis 3, wobei der Aussenring eine Breite von 0,1 mm bis 5,0 mm aufweist.

5. Aufbauelement gemäss Ansprüchen 1 bis 4, wobei der Aussenring eine Höhe von 0,1 mm bis 3 mm, am meisten bevorzugt 1 mm bis 2 mm aufweist.

6. Aufbauelement gemäss einem der voranstehenden Ansprüche, wobei der Aussenring eine oder mehrere Lücken aufweist.

7. Aufbauelement gemäss einem der voranstehenden Ansprüche, wobei der Aussenring so an dem Aufbauelement positioniert ist, dass der Aussenring sich nach Einbau des Implantats in einen Kieferknochen im Bereich zwischen der Kieferknochenoberfläche und der tiefsten Stelle der Zahnfleischfurche, also innerhalb der biologischen Breite, befindet.

8. Aufbauelement gemäss einem der voranstehenden Ansprüche, wobei der mittlere Abstand zwischen dem unteren Ende des Aussenrings und dem unteren Ende des Aufbauelements 0,3 mm bis 7 mm beträgt.

9. Aufbauelement gemäss Anspruch 1 , wobei der zweite Aussenring die gleichen Ausmasse wie der erste Aussenring aufweist.

10. Aufbauelement gemäss einem der Ansprüche 1 bis 9, wobei der Abstand der breitesten Stellen der beiden Aussenringe 0,1 mm bis 5 mm beträgt.

11. Aufbauelement gemäss einem der voranstehenden Ansprüche, wobei das Aufbauelement eine Höhe von 1 mm bis 15 mm, bevorzugt 2 mm bis 12 mm aufweist.

12. Aufbauelement gemäss einem der voranstehenden Ansprüche, wobei das Aufbauelement Keramik umfasst.

13. Aufbauelement gemäss einem der voranstehenden Ansprüche, wobei das obere Ende als Patrize ausgebildet ist.

14. Aufbauelement gemäss einem der Ansprüche 1 bis 12, wobei das obere Ende als Matrize ausgebildet ist.

15. Aufbauelement gemäss einem der voranstehenden Ansprüche, wobei das Aufbauelement als Hohlkörper ausgestaltet ist und die Befestigung des Aufbauelements mit dem Implantat über ein Abutment erfolgt, welches über eine Schraube durch das Innere des Hohlkörpers auf dem Implantat befestigbar ist.

16. Aufbauelement gemäss einem der Ansprüche 1 bis 14, wobei das Aufbauelement als Vollkörper ausgestaltet ist und ein Aussengewinde zur Befestigung des Aufbauelements mit dem Implantat aufweist.

17. Aufbauelement gemäss einem der voranstehenden Ansprüche, worin das Abutment über eine Verdrehsicherung verfügt.

18. Aufbauelement gemäss Anspruch 17, wobei die Verdrehsicherung aus einer am Aufbauelement innen entlang der Längsachse eingefrästen Nut und einer zur Nut passgenauen Feder besteht, welche beim Verbinden ineinander geschoben werden.

19. Einteiliges Implantatsystem zur Verankerung von herausnehmbaren Zahnprothesen, enthaltend ein Implantat zur Befestigung des Implantatsystems in einem Kieferknochen oder einer Zahnwurzel;
eine Implantatoberfläche als oberes Ende des Implantats; und das Aufbauelement gemäss einem der Ansprüche 1 bis 18, das auf der Implantatoberfläche befestigbar ist.

20. Mehrteiliges Implantatsystem zur Verankerung von herausnehmbaren Zahnprothesen, enthaltend
ein Implantat zum Einsetzen in einen Kieferknochen oder eine Zahnwurzel; und
ein Abutment mit einem Schaft zur Befestigung des Abutments in dem Implantat,
einer Abutmentplatte am oberen Ende des Schafts, und dem Aufbauelement gemäss einem der Ansprüche 1 bis 18, das auf der Abutmentplatte befestigbar ist.

21. Implantatsystem gemäss Anspruch 19 oder 20, wobei das Aufbauelement mit der Implantatoberfläche bzw. Abutmentplatte verschraubbar ist.

## Claims

1. Mounting element (10) for fixation of implant-anchored removable dental prostheses, containing
a lower end for fastening of the mounting element (10) to an implant (21) or abutment (22);
an upper end for connection of the mounting element to a dental prosthesis, optionally a friction insert (21); wherein
the base body of the mounting element (10) has an outer ring (11), wherein the base body of the mounting element is angled, and
wherein the base body of the mounting element has a second outer ring (15) positioned appropriately below the first outer ring on the base body such that a recess is formed around the base body between the first outer ring (11) and the second outer ring (15), and wherein at least one outer ring has an angulation of 1° to 40° relating to a lower side of the mounting element (10), **characterised in that**
the distance between the widest sites of the two outer rings is constant over the whole region of the outer rings.

2. Mounting element according to claim 1, wherein the angulation of the base body has an angle of 5° to 50°, preferably of 7° to 40°.

3. Mounting element according to claim 1, wherein the base body of the mounting element has an effective diameter of 1.5 mm to 10 mm.

4. Mounting element according to any one of the claims 1 to 3, wherein the outer ring has a width of 0.1 mm to 5.0 mm.

5. Mounting element according to any one of the claims 1 to 4, wherein the outer ring has a height of 0.1 mm to 3 mm, most preferably 1 mm to 2 mm.

6. Mounting element according to any one of the preceding claims, wherein the outer ring has one or more gaps.

7. Mounting element according to any one of the preceding claims, wherein the outer ring is positioned appropriately on the mounting such that the outer ring, after incorporation of the implant into a jawbone, is situated in the region between the jawbone surface and the lowest site of the gingival sulcus, thus within the biological width.

8. Mounting element according to any one of the preceding claims, wherein the mean distance between the lower end of the outer ring and the lower end of the mounting element is 0.3 mm to 7 mm.

9. Mounting element according to claim 1, wherein the second outer ring has the same dimensions as the first outer ring.

10. Mounting element according to any one of the claims 1 to 9, wherein the distance between the widest sides of the two outer rings is 0.1 mm to 5 mm.

11. Mounting element according to any one of the preceding claims, wherein the mounting element has a height of 1 mm to 15 mm, preferably 2 mm to 12 mm.

12. Mounting element according any one of the preceding claims, wherein the mounting element comprises ceramics.

13. Mounting element according to any one of the preceding claims, wherein the upper end is designed as a male mould.

14. Mounting element according to any one of the claims 1 to 12, wherein the upper end is designed as a female mould.

15. Mounting element according to any one of the preceding claims, wherein the mounting element is designed as a hollow body and the mounting element is fastened to the implant via an abutment, which is fastenable on the implant by a screw extending through the interior of the hollow body.

16. Mounting element according to any one of the claims 1 to 14, wherein the mounting element is designed as a massive body and has an external thread for fastening the mounting element to the implant.

17. Mounting element according to any one of the preceding claims, wherein the abutment is provided with an anti-rotation device.

18. Mounting element according to claim 17, wherein the anti-rotation device consists of a groove milled on the inside of the mounting element along the longitudinal axis and of a spring that fits the groove perfectly, which are pushed into another during connection.

19. One-part implant system for anchoring of removable dental prostheses, containing an implant for fastening the implant system in a jawbone or in a tooth root;
an implant surface as upper end of the implant; and the mounting element according to any one of the claims 1 to 18 being fastenable on the implant surface.

20. Multi-part implant system for anchoring of removable dental prostheses, containing an implant for insertion into a jawbone or a tooth root; and
an abutment having a stem for fastening the abutment in the implant,
an abutment plate at the upper end of the stem, and the mounting element according to any one for the claims 1 to 18 being fastenable on the abutment plate.

21. Implant system according to claim 19 or 20, wherein the mounting element is screwable to the implant surface and/or abutment plate.

## Revendications

1. Élément de montage (10) pour la fixation des prothèses dentaires amovibles ancrées sur un implant, contenant
une extrémité inférieure pour la fixation de l'élément de montage (10) à un implant (21) ou un pilier (22) ;
une extrémité supérieure pour la connexion de l'élément de montage à une prothèse dentaire, facultativement un insert de frottement (21),
le corps de base de l'élément de montage (10) ayant un anneau extérieur (11), le corps de base de l'élément étant angulaire, et
le corps de base de l'élément ayant un deuxième anneau extérieur (15) positionné dessous l'anneau extérieur sur le corps de base de sort qu'un évidement est formé autour du corps de base entre le premier anneau extérieur (11) et le deuxième anneau extérieur (15), et au moins un anneau extérieur ayant une angulation de 1° à 40° relatif a un côté inférieure de l'élément de montage (10), **caractérisée en ce que** la distance entre les parties le plus larges des anneaux extérieurs étant constante sur toute la région des anneaux extérieurs.

2. Élément de montage selon la revendication1, selon lequel l'angulation du corps de base a une angle de 5° à 50°, de préférence de 7° à 40°.

3. Élément de montage selon la revendication 1, selon lequel le corps de base de l'élément de montage a un diamètre effectif de 1,5 mm à 10 mm.

4. Élément de montage selon l'une des revendications 1 à 3, selon lequel l'anneau extérieur a une largeur de 0,1 mm à 5,0 mm.

5. Élément de montage selon l'une des revendications 1 à 4, selon lequel l'anneau extérieur a une hauteur de 0,1 mm à 3 mm, plus de préférence 1 mm à 2 mm.

6. Élément de montage selon l'une des revendications précédentes, selon lequel l'anneau extérieur a une ou plusieurs lacunes.

7. Élément de montage selon l'une des revendications précédentes, selon lequel l'anneau extérieur est positionné à l'élément de montage de sort que l'anneau extérieur, après l'incorporation de l'implant dans une mâchoire, est situé dans la région entre la surface de la mâchoire et le point le plus bas du sillon gingival, donc dans la largeur biologique.

8. Élément de montage selon l'une des revendications précédentes, selon lequel la distance moyenne entre l'extrémité inférieure de l'anneau extérieur et l'extrémité inférieur de l'élément de montage est 0,3 mm à 7 mm.

9. Élément de montage selon la revendication 1, selon lequel le deuxième anneau extérieur a les mêmes dimensions que le premier anneau extérieur.

10. Élément de montage selon l'une des revendications 1 à 9, selon lequel la distance entre les parties le plus larges des anneaux extérieurs est 0,1 mm à 5 mm.

11. Élément de montage selon l'une des revendications précédentes, selon lequel l'élément de montage a une hauteur de 1 mm à 15 mm, de préférence 2 mm à 12 mm.

12. Élément de montage selon l'une des revendications précédentes, selon lequel l'élément de montage comprend la céramique.

13. Élément de montage selon l'une des revendications précédentes, selon lequel l'extrémité supérieure est conçue en tant qu'un moule mâle.

14. Élément de montage selon l'une des revendications 1 à 12, selon lequel l'extrémité supérieure est conçue en tant qu'un moule femelle.

15. Élément de montage selon l'une des revendications précédentes, selon lequel l'élément de montage est conçu en tant qu'un corps creux et l'élément de montage est fixé à l'implant via un pilier, qui est fixable sur l'implant par une vis étendant au travers de l'intérieur du corps creux.

16. Élément de montage selon l'une des revendications 1 à 14, selon lequel l'élément de montage est conçu en tant qu'un corps massif est a un filetage extérieur pour fixant l'élément de montage à l'implant.

17. Élément de montage selon l'une des revendications précédentes, selon le pilier est fourni avec un dispositif anti-rotation.

18. Élément de montage selon la revendication 17, selon lequel le dispositif anti-rotation consiste d'une rainure fraisée à l'intérieur de l'élément de montage le long de l'axe longitudinal et un ressort qui s'ajuste parfaitement à la rainure, qui sont poussées l'un dans l'autre pendant la connexion.

19. Système d'implant en une partie pour ancrer des prothèses dentaires amovibles, contenant un implant pour la fixation le système d'implant dans la mâchoire ou une racine dentaire ;
une surface d'implant en tant qu'un extrémité supérieur de l'implant ; et l'élément de montage selon l'une des revendications 1 à 18 étant fixable sur la surface d'implant.

20. Système d'implant en plusieurs parties pour ancrer des prothèses dentaires amovibles, contenant
un implant pour l'insertion dans une mâchoire ou une racine dentaire ; et
un pilier ayant une tige pour la fixation du pilier dans l'implant,
une plaque de pilier à l'extrémité supérieur de la tige, et l'élément de montage selon l'une des revendications 1 à 18 étant fixable sur la plaque du pilier.

21. Système d'implant selon la revendication 19 ou 20, selon lequel l'élément de montage est vissable à la surface d'implant et/ou la plaque du pilier.
